# EUROPEAN PATENT SPECIFICATION

(11) **EP 2 354 787 B1**
(45) Date of publication and mention of the grant of the patent: **15.07.2015**
(21) Application number: 10001360.6
(22) Date of filing: 10.02.2010
(51) Int. Cl.: G01N 31/16

(54) **Potentiometric titration method and potentiometric titration apparatus**
Potentiometrische Titrierungsverfahren und -Vorrichtung
Procédé et dispositif de titrage potentiométrique

(43) Date of publication of application: 10.08.2011
(73) Proprietor: Mitsubishi Chemical Analytech Co., Ltd., Mie-ken (JP)
(72) Inventor: Sasaki, Masahiro, Chigasaki-shi Kanagawa-ken (JP); Kamo, Toshiyuki, Chigasaki-shi Kanagawa-ken (JP); Ohashi, Yoko, Chigasaki-shi Kanagawa-ken (JP)
(74) Representative: Hoffmann Eitle

(56) References cited:
- FR-A1- 2 504 680
- US-A- 3 769 178
- ISBELL A F JR ET AL: "Computer analysis of data from potentiometric titrations using ion-selective indicator electrodes" ANALYTICAL CHEMISTRY USA, vol. 45, no. 14, December 1973 (1973-12), pages 2363-2369, XP002585576 ISSN: 0003-2700
- WU A H B ET AL: "Versatile microcomputer-controlled titrator" ANALYTICAL CHEMISTRY USA, vol. 50, no. 14, December 1978 (1978-12), pages 2090-2096, XP002585577 ISSN: 0003-2700
- KAMAKURA KATSUYOSHI: "A plot of pH vs. the logarithm of the titrant volume in potentiometric titration. The determination of phenol in water." BULLETIN OF THE CHEMICAL SOCIETY OF JAPAN 1980 MAR, vol. 53, no. 3, March 1980 (1980-03), pages 658-660, XP002585578
- Deborah Exton ET AL: "Finding the equivalence point on a titration curve", , 26 August 1996 (1996-08-26), pages 1-2, XP55017426, Retrieved from the Internet: URL:http://chemlabs.uoregon.edu/GeneralRes ources/pdf/equivPt_text.pdf [retrieved on 2012-01-24]

## Description

### BACKGROUND OF THE INVENTION:

The present invention relates to a potentiometric titration method and a potentiometric titration apparatus, and more particularly, to a potentiometric titration method capable of accurately determining a terminal point of titration irrespective of occurrence of change in indicator potential, and a potentiometric titration apparatus for performing automatic titration according to the potentiometric titration method.

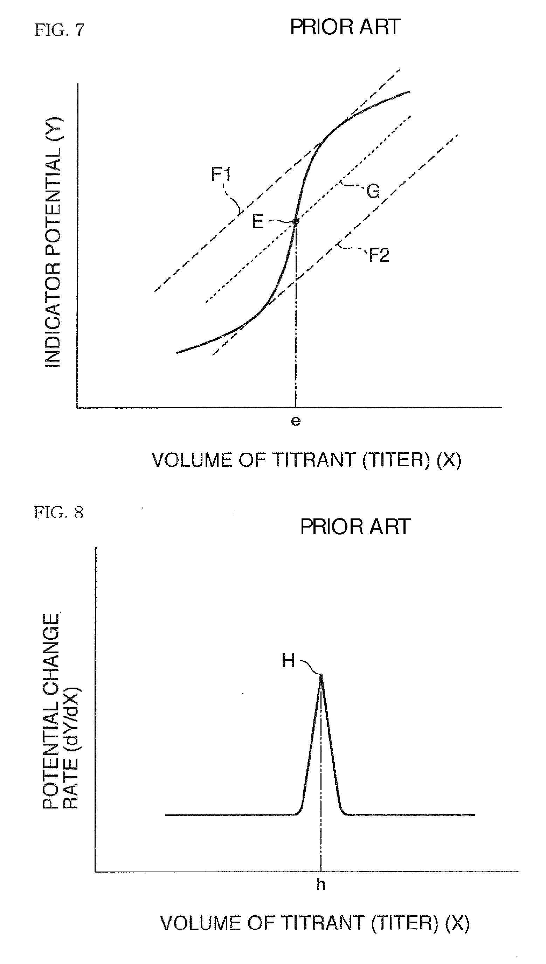

In the potentiometric titration analysis, there has been generally utilized an inflection point method or an intersection point method using a titration curve, or a method using a differential curve derived from the titration curve. Fig. 7 is a graph showing a concept of the conventional potentiometric titration analyzing method using the intersection point method, whereas Fig. 8 is a graph showing a concept of the conventional potentiometric titration analyzing method using the differential curve.

In the above inflection point method, the titration procedure is carried out to prepare a titration curve in which the value (Y) of indicator potential is plotted on an ordinate axis and the value (X) of a volume of a titrant added to a sample is plotted on an abscissa axis to determine the abscissa axis value corresponding to an inflection point thereof as a terminal point of the titration. The inflection point method is suitably used for the analysis in which an inflection point is apparently observed. Also, in the intersection point method, as shown in Fig. 7, tangent lines (F1) and (F2) each having a gradient of 45° are drawn at the portions of a titration curve prepared in the same manner as described above which portions extend toward maximum and minimum values thereof, respectively, and then an intermediate line (G) which is spaced by an equal distance from each of the tangent lines and extend in parallel therewith is drawn, to thereby read an abscissa axis value of an intersection point (E) between the titration curve and the intermediate line (G) as a terminal point (E) of the titration. The intersection point method is a so-called drawing method and effective for the analysis of a titration curve having a pattern in which any clear inflection point is hardly recognized.

On the other hand, in the method using a differential curve, as shown in Fig. 8, an absolute value of a rate of change in potential (dY/dX) is plotted on an ordinate axis and the value (X) of a volume of a titrant added is plotted on an abscissa axis to prepare a differential curve, and the abscissa value of a peak (H) on the differential curve at which the rate of change in potential (dY/dX) becomes maximum is read out as a terminal point (h) of the titration. The method using a differential curve is suitably used for automatic titration in which automatic computation is carried out using a titration apparatus (refer to JIS K0113, 1997, Revised Edition "General Rules for methods of potentiometric, amperometric, coulometric and Karl Fischer titrations").

Meanwhile, in the titration analysis, a titration curve is generally prepared by plotting about 10 to 20 measured values to determine the above inflection point, intersection point or peak on the curve. However, owing to the problems such as properties of the sample to be measured and poor measuring sensitivity of the apparatus, it has been difficult to obtain a smooth titration curve. Also, in the case where there is caused considerable change in indicator potential at an inflection point portion of the titration curve such as a long-continued maximum gradient portion of the curve including the inflection point, or in the case where a peak of the differential curve is unclear, there tends to occur such a problem that a terminal point of the titration curve cannot be accurately determined. When the titration curve is graphed to manually draw the tangential lines, an analysis accuracy of the titration analysis may be enhanced by skilled experts to a certain extent. However, in particular, when performing an automatic titration using a titration apparatus, it has been still difficult to estimate a smooth titration curve and therefore estimate adequate tangential lines.

Isbell A. F. Jr. et. al. in Computer Analysis of Data from Potentiometric Titrations Using Ion-Selective Indicator Electrodes, Analytical Chemistry. Vol. 45, no. 14. December 1973, pages 2363-2369 discloses a computer program, TITRATE, that analyzes only meaningful data of a titration and computes the analyte concentration, the fraction of ideal Nernstian response, and the electrode formal potential. In addition, standard deviations, a comprehensive error analysis, and data which facilitate plotting both sigmold and linear titration curves are computed. The computer program TITRATE has been written to perform the nonlinear least squares calculation. All input data are easily obtained with the possible exception of the estimates of experimental error. For the least squares treatment to be valid, all systematic error must be accounted before attempting to estimate the random experimental error. Further, an alternative method for locating the equivalence point in titrations involving 1:1 precipitates or complexes only. This consists of drawing tangents to the extremities of the titration curve and the bisecting these tangents. The intersection of the curve with the bisecting line defines the equivalence point. The success of this technique is diminished by the asymmetry of titration curve.

Wu A. H. B. et. al., Analytical Chemistry, USA, vol. 50, no. 14, December 1878 Versatile Microcomputer-Controlled Titrator pages 2090-2096 discloses a versatile automatic microcomputer-controlled titrator that is capable of handling UV-visible spectrophotometric, potentiometric, and amperometric end-point detection and acid-base, redox, compleximetric, and precipitation reactions. Titrants can be delivered either by burets operated in a continuous constant rate mode, or incremental modes, or by coulometric generation. Auxiliary pipets and burets are interfaced for dilution, buffering, and adjustments of pH or ionic strength. The instrument is made from standard laboratory modules including titrator stand, spectrophotometer, potentiostate, constant-current source, and pH meter.

FR-A1-2504680 discloses an electrochemical analysis operation for a potentiometric titration, by means of an indicator electrode and a reference electrode. The operation measures the potential difference between the electrodes to discover points of inflection. From the points of the curve of titration stored in the memory, the device establishes the corresponding curve and seeks the equivalence points corresponding to the maximum of the curve. The point of crossing tangents to curve are determined.

### SUMMARY OF THE INVENTION

The present invention has been accomplished in view of the above conventional problems. An object of the present invention is to provide a potentiometric titration method capable of accurately determining a terminal point of titration irrespective of occurrence of change in indicator potential which is also suitable for automatic titration, and a potentiometric titration apparatus for performing automatic titration according to the potentiometric titration method.

The present invention provides a potentiometric titration method for conducting titration based on an amount of a titrant added and an indicator potential according to Claim 1.

The present invention also provides a potentiometric titration apparatus according to Claim 3.

### BRIEF DESCRIPTION OF THE DRAWINGS

Fig. 1 is a graph visually showing a concept of a potentiometric titration method according to the present invention.
Fig. 2 is a graph showing an example of application of the present invention to titration analysis including a plurality of reactions.
Fig. 3 is a graph showing another example of application of the present invention to titration analysis including a plurality of reactions (inflection points).
Fig. 4 is block diagram showing a basic construction of a potentiometric titration apparatus according to the present invention.
Fig. 5 is a view showing an image displayed in oxidation-reduction reaction as one embodiment of the present invention.
Fig. 6 is a view showing an image displayed in analysis of a purity of caffeine as another embodiment of the present invention.
Fig. 7 is a graph showing a concept of the conventional potentiometric titration method using an intersection point method.
Fig. 8 is a graph showing a concept of the conventional potentiometric titration method using a differential curve.

### EXPLANATION OF REFERENCE NUMBERS

1: Titration section; 2: Control section; 3: Display/Recording section; 4: Titration vessel; 5: Detector; 51: Indicator electrode; 52: Reference electrode; 6: Titrant addition device; A: Intersection point; a: Terminal point; B1: First estimation line; B2: Second estimation line; C: Intermediate line; D: Straight line; d1 to d6: Measured values (decision points (plot points)); L: Threshold value; P1: Peak; P: Tentative terminal point; V1, V2: Regions of values of indicator potential.

### DETAILED DESCRIPTION OF THE INVENTION

The following describes, in the case of assuming a titration curve and a differential curve, a tentative terminal point of titration is set on the titration curve using a peak of the differential curve; measured values on the titration curve which are spaced by a sufficient distance apart from the tentative terminal point, more specifically, three measured values which are not present in the vicinity of an inflection point of the titration curve and constitute respective portions of the titration curve extending toward maximum and minimum values thereof where the change in indicator potential is moderate, are used as decision points, to determine a linear estimation line for each set of the decision points; and an intersection point between an intermediate line of these estimation lines and the titration curve is adopted as a terminal point of the titration. By using such a method, it is possible to avoid adverse influence due to large change in indicator potential in the vicinity of the inflection point, and to perform automatic titration by automatic computation.

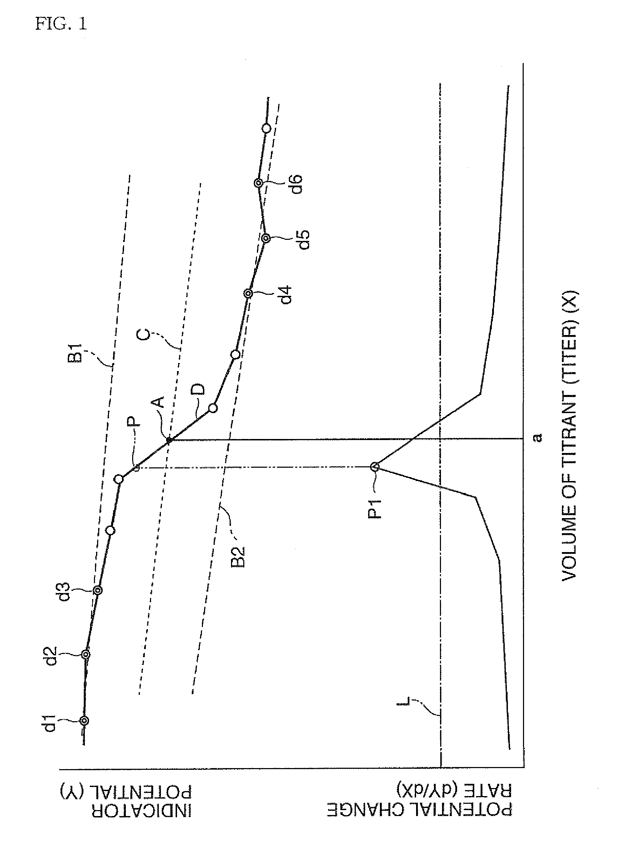

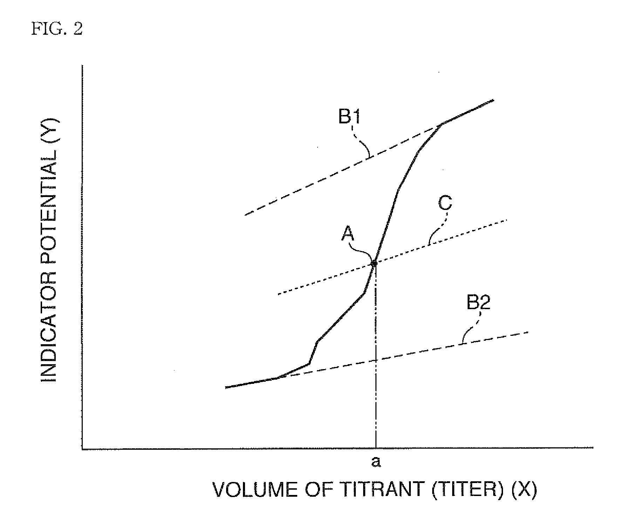

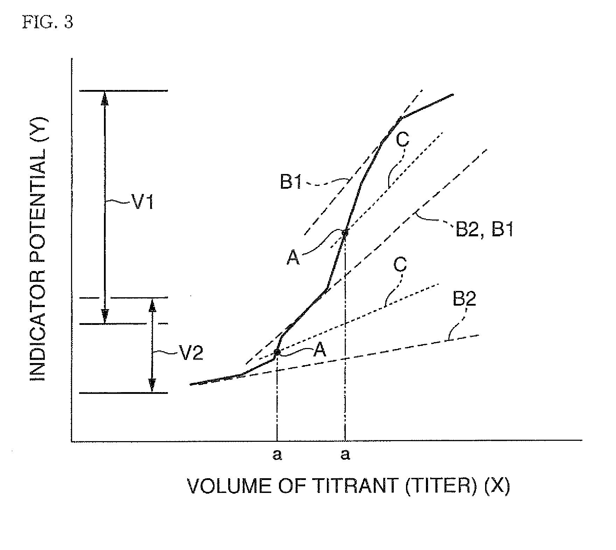

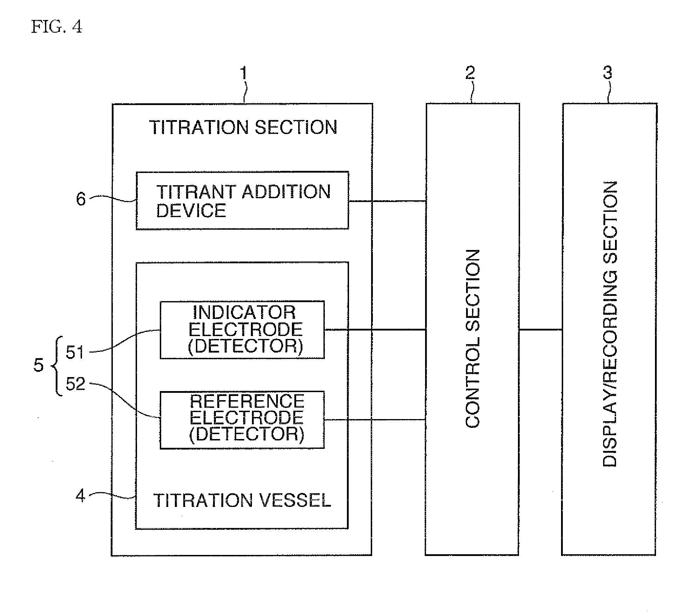

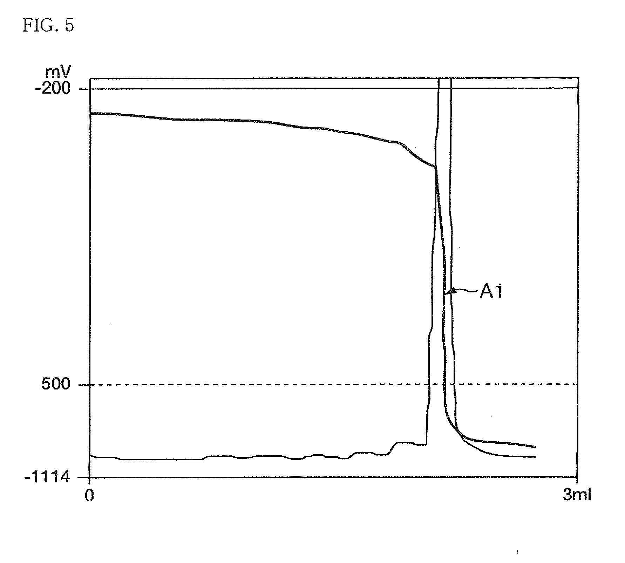

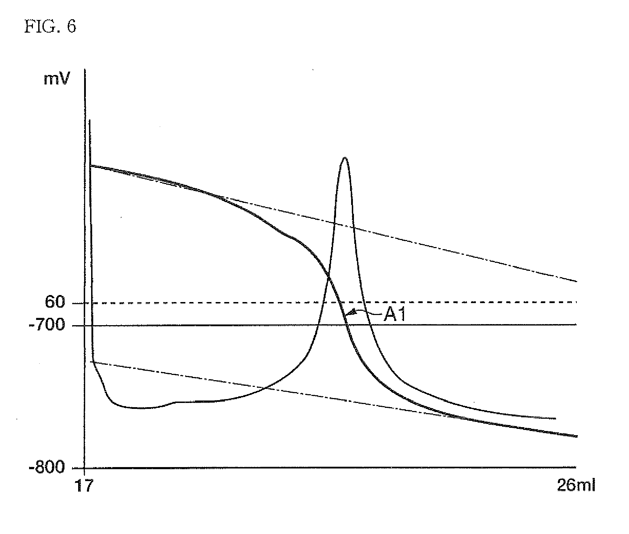

The embodiments of the present invention are described by referring to the accompanying drawings in which Fig. 1 is a graph showing a concept of a potentiometric titration method according to the present invention; Figs. 2 and 3 are graphs showing examples of application of the present invention to titration analysis including a plurality of reactions; Fig. 4 is block diagram showing a basic construction of an potentiometric titration apparatus according to an embodiment of the present invention; and Figs. 5 and 6 are views showing images displayed in titration analysis as respective embodiments of the present invention.

The present invention can be applied to titration for determining neutralization, oxidation-reduction, precipitation, photometric, electric conductivity, polarization, petroleum neutralization value, stat, etc., by suitably selecting the kind of electrodes used in the detector and a titrant. First, the potentiometric titration apparatus according to the present invention is explained. As shown in Fig. 4, the potentiometric titration apparatus according to the present invention is constructed from the same mechanical constitutional elements as used in the conventionally known apparatuses, and generally comprises a titration section (1), a control section (2) and a display/recording section (3).

The titration section (1) comprises a titration vessel (4) for accommodating a sample, a detector (5) for detecting an indicator potential using an indicator electrode (51) and a reference electrode (52), and a titrant addition device (6) for adding a titrant to the sample. The titration vessel (4) is constructed from a glass container mounted on a stirrer.

The detector (5) is equipped with at least one pair of the indicator electrode (51) and the reference electrode (52). As the indicator electrode (51), there may be used various metal electrodes capable of responding to a metal ion concentration, membrane electrodes capable of converting a difference in concentration between inside and outside of a membrane into a potential, and glass electrodes. Also, as the reference electrode (52) providing a reference potential, there may be usually used a salt bridge and a hardly-soluble metal salt electrode. The titrant addition device (6) is capable of controlling a titer by a pulse motor in proportion to a voltage detected by the indicator electrode (51), and comprises a burette having a tip inserted into the titration vessel (4) from which a titrant is dropped.

The control section (2) comprises a microcomputer into which a program is previously written, and a control circuit for controlling the titration section (1). More specifically, the microcomputer of the control section (2) comprises a logic board on which a processor (CPU), a main memory for computation (RAM), a program storing memory, a controller, an input/output device (I/O), etc., are mounted, and has a function of controlling the above control circuit according to progress of the titration. On the other hand, the control circuit is constructed of a circuit for monitoring signals detected by the indicator electrode (51) and the reference electrode (52) (electrode monitoring circuit), a circuit for controlling a dropping speed of the titrant from the titrant addition device (6), etc.

The control section (2) is constructed such that a control signal supplied from the microcomputer is outputted to the control circuit on the basis of the instruction generated from a control panel (not shown) to thereby control operation of the titration in the titration section (1) via the control circuit. In addition, the control section (2) is constructed such that a signal detected by the titration section (1) is inputted to the microcomputer via the control circuit to analyze data of the titration and output the analyzed results, if required, together with the analyzing process, to the display/recording section (3). Thus, the control section (2) has a function of controlling the titrant addition device (6) on the basis of an indicator potential detected by the detector (5) and computing a terminal point of the titration as described below.

The display/recording section (3) comprises a display for displaying a progress of the analysis and analysis results, and, if required, a small-size printer for printing the analysis results. Thus, the display/recording section (3) is constructed so as to display or record the terminal point of the titration as well as, if required, the indicator potential or the amount of the titrant added.

Next, the potentiometric titration method for performing potentiometric titration from an amount of a titrant added (titer) and an indicator potential according to the present invention is explained as a function of the above control section (2).

In the present invention, the value (Y) of the indicator potential detected by the detector (5) and the value (X) of a volume of the titrant added which values have been procured in the titration procedure are subjected a predetermined data processing to obtain an accurate terminal point of the titration. Meanwhile, in the following descriptions, for the sake of clear understanding, reference is made to graphs. However, in the present invention, since the terminal point of the titration can be determined by computation, preparation of the graphs is not necessarily required during the computation.

In the present invention, as shown in Fig. 1, a continuous line (bending line) prepared by plotting the value (Y) of the indicator potential on an ordinate axis and plotting the value (X) of a volume of the titrant on an abscissa axis is assumed as a titration curve (refer to an upper portion of the graph shown in Fig. 1), and further a continuous line (bending line) prepared by plotting an absolute value of a rate of change in potential (dY/dX) on an ordinate axis and plotting the value (X) of a volume of the titrant on an abscissa axis is assumed as a differential curve (refer to a lower portion of the graph shown in Fig. 1). In addition, the value on the titration curve which corresponds to a peak (P1) on the differential curve is assumed as a tentative terminal point (P).

In the titration analysis, in the case of a single reaction, one peak (P1) is determined on the differential curve to attain one terminal point. At this time, there may occur such a case where a plurality of peaks are observed on the differential curve. Therefore, on the basis of the tendency expected according to substances to be reacted or the tendency obtained during the titration analysis, a lower value (L) of an absolute value of the rate of change in potential (dY/dX) is set to extract such a peak (P1) on the differential curve at which the rate of change in potential (dY/dX) becomes maximum beyond the lower value. The value on the titration curve which corresponds to the above peak (P1) is determined as the tentative terminal point (P).

Next, the computation is carried out by using measured values constituting the titration curve. More specifically, the two measured values on the titration curve which are adjacent to the above tentative terminal point (P) are selected to compute a straight line (D) (linear function) connecting the two measured values. Such a straight line (D) is a line passing trough an inflection point on a titration curve, or a line located very closely to the inflection point when the titration curve is actually prepared.

In addition to the computation for preparing the straight line (D), measured points on the titration curve which are used for deciding the terminal point of the titration, are determined to compute two lines, i.e., a linear estimation lines (B1) and (B2) (linear functions). More specifically, the number of measured values on the titration curve is previously set as the number of decision points (n). The number of the decision points (n) may vary depending upon the number of data, and is usually 5 to 10 in each of forward and rearward directions from the inflection point on the titration curve from the practical viewpoints. However, in order to reduce adverse influence owing to a large change in the indicator potential in the vicinity of the inflection point, the number of the measured values which are used as the number of the decision points (n) is not less than 3 in each of the positive and negative directions along the abscissa axis on the basis of the tentative terminal point (P) as a reference point.

As the measured values (decision points) on the titration curve which are used for decision of the terminal point, there may be used two sets of values, i.e., a set of measured values (d1), (d2) and (d3) on the titration curve which are present in the range of from [(tentative terminal point (P)) - (number of decision points (n))] to [(tentative terminal point (P)) - (number of decision points (n)) + 2] (three measured values indicated by a double circle (⊚) on the left side of the tentative terminal point (P) in Fig. 1), and a set of measured values (d4), (d5) and (d6) on the titration curve which are present in the range of from [(tentative terminal point (P)) + (number of decision points (n)) -2] to [(tentative terminal point (P)) + (number of decision points (n))] (three measured values indicated by a double circle (⊚) on the right side of the tentative terminal point (P) in Fig. 1). Fig. 1 illustrates the case where the number of the decision points (n) is 5.

The first estimation line (B1) is computed by a least squares method on the basis of the measured values (d1), (d2) and (d3) on the titration curve which are present in the range of from [(tentative terminal point (P)) - (number of decision points (n))] to [(tentative terminal point (P)) - (number of decision points (n)) + 2]. Whereas, the second estimation line (B2) is computed by a least squares method on the basis of the measured values (d4), (d5) and (d6) on the titration curve which are present in the range of from [(tentative terminal point (P)) + (number of decision points (n)) -2] to [(tentative terminal point (P)) + (number of decision points (n))]. The above first estimation line (B1) and second estimation line (B2) are similar to a tangential line as defined the conventional JIS methods. However, by using data sufficiently spaced apart from the inflection point and estimating a tendency of an unchanged portion of the titration curve by a least squares method, it is possible to accurately determine a range of the inflection point.

As described above, after computing the estimation lines (B1) and (B2), the intermediate line (C) of the first estimation line (B1) and the second estimation line (B2) are computed. The intermediate line (C) is a line (linear function) that extends spaced by an equal distance apart from each of the estimation lines (B1) and (B2). Then, the intersection point (A) of the intermediate line (C) and the above straight line (D) is computed, and the read-out value of the intersection point on an abscissa axis is determined as a terminal point (a) of the titration.

Thus, in the present invention, the tentative terminal point (P) on the titration curve is set by utilizing the peak (P1) on the differential curve, and 2 sets of the measured values on the titration curve which are spaced by a sufficient distance from the tentative terminal point, i.e., a set of the three measured points (d1) to (d3) and a set of the three measured points (d4) to (d6) which are respectively spaced from the inflection point of the titration curve and constitute portions of the titration curve extending toward maximum and minimum values where the change in potential is moderate, are used as decision points to determine the linear estimation lines (B1) and (B2) for each set of the decision points by a least squares method. Further, the intersection point between the intermediate line (C) of these estimation lines and the titration curve, more specifically, the intersection point (A) between the intermediate line (C) and the straight line (D), is adopted as a terminal point of the titration. Therefore, in accordance with the present invention, it is possible to accurately determine the terminal point of the titration without undergoing adverse influence owing to large change in the indicator potential in the vicinity of the inflection point. In addition, since the terminal point of the titration is simply computed according to a program set previously, the present invention can be suitably used for automatic titration.

The above embodiment of the present invention provides an example of titration including a single reaction. However, as shown in Figs. 2 and 3, the present invention can also be similarly applied to other titration procedures, for example, titration including a two-stage reaction. Fig. 2 shows an example of titration analysis in which the titration curve is generally observed in the form of a quintic curve. In the titration analysis, in the case of determining one terminal point, the amount of the titrant added from a tip of the burette of the titrant addition device (6) is increased at predetermined proportions, and the number of the decision points (n) is also increased, so that the titration curve can be handled in the same manner as a cubic curve to obtain one terminal point (a).

Further, Fig. 3 shows an example of titration analysis in which the titration curve is observed in the form of a quintic curve similarly to Fig. 2. In the titration analysis, in the case of determining two terminal points, the range of the value (Y) of the indicator potential in which it is expected to observe any inflection points on the titration curve, is divided into a plurality of regions, for example, two regions (V1) and (V2). In each of the regions (V1) and (V2), the same computation as used above for the titration including a single reaction is carried out. In this case, the number of the decision points (n) for computation of each region may be set to a similar number to that used above for the titration including a single reaction. As a result, it is possible to determine a plurality of terminal points, for example, two terminal points (a), (a).

In addition, in the above potentiometric titration apparatus of the present invention, the control section (2) may be constructed so as to have a further computation function capable of displaying and preparing a titration curve and a differential curve on a display of the display/recording section (3) on the basis of the titration method defined by the conventional JIS method (JIS K0113), i.e., on the basis of the method using an inflection point, an intersection point and a differential curve, and to perform the titration procedure while changing-over the function of the control section to those of the JIS methods, if required. In this case, the analysis results of the titration method according to the present invention may be compared with the analysis results according to the conventional JIS method.

Meanwhile, in the potentiometric titration apparatus of the present invention, when executing the above algorithm, the titer and analysis results may be displayed on the display of the display/recording section (3) by numerals only. However, the titration curve or differential curve may also be graphed to display the respective estimation lines (B1) and (B2), intermediate line (C), intersection point (A) and terminal point (a), whereby the progress of titration and analysis results can be visually observed on the display.

Figs. 5 and 6 represent images of titration analysis on the display as examples of the present invention. Fig. 5 shows a displayed image of oxidation-reduction reaction in which a Mohr's salt was titrated with KMnO₄, whereas Fig. 6 shows a displayed image of analysis for purity of caffeine in which anhydrous caffeine was titrated with an acetic acid solution of perchloric acid. In the example shown in Fig. 5, the titration curve prepared undergoes a large change in indicator potential in an inflection point portion thereof.

In accordance with the present invention, three or more measured points that are present on respective portions of the estimated titration curve which are spaced by a sufficient distance apart from an inflection point thereof and exhibit a moderate change in indicator potential, are used as decision points to obtain linear estimation lines on the respective curve portions by a least squares method, and an intersection point between an intermediate line of these estimation lines and the titration curve is determined as a terminal point of the titration. Therefore, according to the present invention, it is possible to accurately determine the terminal point of the titration without undergoing adverse influence owing to large change in indicator potential in the vicinity of the inflection point. Moreover, the present invention can be suitably applied to automatic titration, because the computation therefor can be readily carried out according to a program set previously.

## Claims

1. A potentiometric titration method for conducting titration based on an amount of a titrant added and an indicator potential, said method comprising:
assuming a continuous line prepared by plotting a value of the indicator potential on an ordinate axis and plotting a value of a volume of the titrant on an abscissa axis, as a titration curve, the values being determined according to the titration procedure;
assuming a continuous line prepared by plotting an absolute value of a rate of change in potential on an ordinate axis and plotting the value of a volume of the titrant on an abscissa axis, as a differential curve;
assuming a value on the titration curve which corresponds to a peak (P1) on the differential curve, as a tentative terminal point (P);
computing a straight line (D) connecting two measured values on the titration curve which are present adjacent to the tentative terminal point (P);
computing a linear first estimation line (B1) by a least squares method based on measured values (d1, d2, d3) on the titration curve which are present in the range of tentative terminal point (P) - number of decision points to tentative terminal point (P) - number of decision points + 2;
computing a linear second estimation line (B2) by a least squares method based on measured values (d4), (d5) and (d6) on the titration curve which are present in the range of tentative terminal point (P) + number of decision points - 2 to tentative terminal point (P) + number of decision points,
computing an intermediate line (C) spaced an equal distance apart from each of the first estimation line (B1) and the second estimation line (B2); and
computing an intersection point (A) of the intermediate line (C) and the straight line (D) to read out a value of the intersection point on the abscissa axis as a terminal point (a) of the titration;
wherein:
the number of decision points represents the number of the measured values on portions of the titration curve previously set and used for determination of a terminal point of the titration; and
the number of the measured values are not less than 3 in each of the portions of the titration curve which extend in positive and negative directions, respectively, along the abscissa axis, on the basis of the tentative terminal point (P) as a reference point.

2. A potentiometric titration method according to Claim 1, wherein a range of the value of indicator potential is divided into a plurality of regions (V1, V2), to obtain a plurality of terminal points (a).

3. A potentiometric titration apparatus comprising a titration vessel (4) for accommodating a sample, a detector (51) for detecting a indicator potential using an indicator electrode and a reference electrode (52), a titration section (1) constituted from a titrant addition device (6) for adding a titrant to the sample, and a control section (2) for controlling the titrant addition device based on the indicator potential detected by the detector (51) and for computing a terminal point of titration,
said apparatus being **characterised in that**:
the control section (2) is arranged to compute the terminal point of the titration using the potentiometric titration method as defined in Claim 1 or Claim 2.

## Patentansprüche

1. Ein potenziometrisches Titrationsverfahren zum Durchführen einer Titration basierend auf einer Menge eines hinzugefügten Titrants und eines Indikatorpotenzials, wobei das Verfahren umfasst:
Annehmen einer durchgezogenen Linie, welche durch Aufzeichnen eines Werts des Indikatorpotenzials auf einer Ordinatenachse und Aufzeichnen eines Werts eines Volumens des Titrants auf einer Abszissenachse als eine Titrationskurve erstellt wird, wobei die Werte entsprechend der Titrationsprozedur bestimmt werden;
Annehmen einer durchgezogenen Linien, welche durch Aufzeichnen eines Absolutwerts einer Potenzialänderungsrate auf einer Ordinatenachse und Aufzeichnen des Werts eines Volumens des Titrants auf einer Abszissenachse als eine Differenzialkurve erstellt wird;
Annehmen eines Werts auf der Titrationskurve, welcher einem Peak (P 1) auf der Differenzialkurve entspricht als einen vorläufigen Endpunkt (P);
Berechnen einer geraden Linie (D), welche zwei Messwerte auf der Titrationskurve verbindet, welche benachbart zu dem vorläufigen Endpunkt (P) vorhanden sind;
Berechnen einer linearen ersten Abschätzungslinie (B1) durch eine Methode der kleinsten Quadrate basierend auf Messwerten (d1, d2, d3) auf der Titrationskurve, welche in dem Bereich von vorläufiger Endpunkt (P) - Anzahl von Entscheidungspunkten zu vorläufigem Endpunkt (P) - Anzahl von Entscheidungspunkten + 2 vorhanden sind;
Berechnen einer linearen zweiten Abschätzungslinie (B2) durch eine Methode der kleinsten Quadrate basierend auf Messwerten (d4), (d5) und (d6) auf der Titrationskurve, welche in dem Bereich von vorläufiger Endpunkt (P) + Anzahl von Entscheidungspunkten - 2 zu vorläufiger Endpunkt (P) + Anzahl von Entscheidungspunkten vorhanden sind,
Berechnen einer Zwischenlinie (C), welche in einem gleichen Abstand jeweils von der ersten Abschätzungslinie (B1) und der zweiten Abschätzungslinie (B2) beabstandet ist; und
Berechnen eines Schnittpunkts (A) der Zwischenlinie (C) und der geraden Linie (D), um einen Wert des Schnittpunkts auf der Abszissenachse als einen Endpunkt (a) der Titration auszulesen;
wobei:
die Anzahl von Entscheidungspunkten die Anzahl der Messwerte an Teilen der vorab eingestellten und für eine Bestimmung eines Endpunkts der Titration verwendeten Titrationskurve darstellen; und
die Anzahl der Messwerte nicht weniger als 3 in jeder der Teile der Titrationskurve ist, welche sich in einer positiven und einer negativen Richtung entsprechend entlang der Abszissenachse erstrecken, auf der Basis des vorläufigen Endpunkts (P) als einen Referenzpunkt.

2. Ein potenziometrisches Titrationsverfahren gemäß Anspruch 1, wobei ein Bereich des Werts des Indikatorpotenzials in eine Vielzahl von Bereichen (V1, V2) unterteilt wird, um eine Vielzahl von Endpunkten (a) zu erhalten.

3. Eine potenziometrische Titrationsvorrichtung umfassend ein Titrationsgefäß (4) zum Aufnehmen einer Probe, einen Detektor (51) zum Erkennen eines Indikatorpotenzials mittels einer Indikatorelektrode und einer Referenzelektrode (52), eine Titrationseinheit (1), welche aus einer Titrant-Hinzufügungsvorrichtung (6) zum Hinzufügen eines Titrants zu der Probe gebildet ist, und eine Steuereinheit (2) zum Steuern der Titrant-Hinzufügungsvorrichtung basierend auf dem durch den Detektor (51) erkannten Indikatorpotenzial und zum Berechnen eines Endpunkts einer Titration,
wobei die Vorrichtung **dadurch gekennzeichnet ist, dass**:
die Steuereinheit (2) zum Berechnen des Endpunkts der Titration unter Verwendung des potenziometrischen Titrationsverfahrens, wie in Anspruch 1 oder 2 bestimmt, ausgebildet ist.

## Revendications

1. Procédé de titrage potentiométrique pour conduire un titrage sur la base d'une quantité d'une solution titrée ajoutée et d'un potentiel indicateur, ledit procédé comprenant le fait :
de supposer une ligne continue préparée par traçage d'une valeur du potentiel indicateur sur un axe des ordonnées et par traçage d'une valeur d'un volume de la solution titrée sur un axe des abscisses, en tant que courbe de titrage, les valeurs étant déterminées selon la procédure de titrage ;
de supposer une ligne continue préparée par traçage d'une valeur absolue d'un taux de variation du potentiel sur un axe des ordonnées et par traçage de la valeur d'un volume de la solution titrée sur un axe des abscisses, en tant que courbe différentielle ;
de supposer une valeur sur la courbe de titrage qui correspond à un pic (P1) sur la courbe différentielle, en tant que point terminal d'essai (P) ;
de calculer une ligne droite (D) reliant deux valeurs mesurées sur la courbe de titrage qui sont présentes de manière adjacente au point terminal d'essai (P) ;
de calculer une première ligne d'estimation linéaire (B1) par une méthode des moindres carrés sur la base de valeurs mesurées (d1, d2, d3) sur la courbe de titrage qui sont présentes dans la plage d'un point terminal d'essai (P) - un nombre de points de décision par rapport à un point terminal d'essai (P) - un nombre de points de décision + 2 ;
de calculer une deuxième ligne d'estimation linéaire (B2) par une méthode des moindres carrés sur la base de valeurs mesurées (d4), (d5), et (d6) sur la courbe de titrage qui sont présentes dans la plage d'un point terminal d'essai (P) + un nombre de points de décision - 2 par rapport à un point terminal d'essai (P) + un nombre de points de décision ;
de calculer une ligne intermédiaire (C) espacée d'une distance égale de chacune de la première ligne d'estimation (B1) et de la deuxième ligne d'estimation (B2) ; et
de calculer un point d'intersection (A) de la ligne intermédiaire (C) et de la ligne droite (D) pour lire une valeur du point d'intersection sur l'axe des abscisses en tant que point terminal (a) du titrage ;
dans lequel :
le nombre de points de décision représente le nombre des valeurs mesurées sur des parties de la courbe de titrage précédemment défini et utilisé pour la détermination d'un point terminal du titrage ; et
le nombre des valeurs mesurées est supérieur ou égal à 3 dans chacune des parties de la courbe de titrage qui s'étendent dans des directions positive et négative, respectivement, le long de l'axe des abscisses, sur la base du point terminal d'essai (P) en tant que point de référence.

2. Procédé de titrage potentiométrique selon la revendication 1, dans lequel une plage de la valeur du potentiel indicateur est divisée en une pluralité de régions (V1, V2), pour obtenir une pluralité de points terminaux (a).

3. Appareil de titrage potentiométrique comprenant un récipient de titrage (4) pour recevoir un échantillon, un détecteur (51) pour détecter un potentiel indicateur en utilisant une électrode indicatrice et une électrode de référence (52), une section de titrage (1) constituée d'un dispositif d'ajout de solution titrée (6) pour ajouter une solution titrée à l'échantillon, et une section de commande (2) pour commander le dispositif d'ajout de solution titrée sur la base du potentiel indicateur détecté par le détecteur (51) et pour calculer un point terminal de titrage,
ledit appareil étant **caractérisé en ce que** :
la section de commande (2) est agencée pour calculer le point terminal du titrage en utilisant le procédé de titrage potentiométrique tel que défini dans la revendication 1 ou 2.
